# EUROPEAN PATENT SPECIFICATION

(11) **EP 4 385 322 B1**
(45) Date of publication and mention of the grant of the patent: **20.08.2025**
(21) Application number: 23212629.2
(22) Date of filing: 28.11.2023
(51) Int. Cl.: A01K 63/10, G05D 1/243, G05D 1/246, G05D 1/648, G05D 105/10, G05D 107/00, G05D 109/15, G05D 111/10

(54) **UNDERWATER CLEANING APPARATUS**
UNTERWASSERREINIGUNGSGERÄT
APPAREIL DE NETTOYAGE SOUS-MARIN

(30) Priority: 13.12.2022 JP 2022198541
(43) Date of publication of application: 19.06.2024
(73) Proprietor: Yanmar Holdings Co., Ltd., Osaka-shi, Osaka (JP)
(72) Inventor: SUZUKI, Akihiro, Osaka (JP); HIRATA, Daisuke, Oita (JP)
(74) Representative: Novagraaf International SA

(56) References cited:
- CN-A- 114 109 095
- CN-A- 115 390 570
- US-A1- 2013 298 817
- US-A1- 2016 244 988
- US-A1- 2019 085 579

## Description

### TECHNICAL FIELD

The present disclosure relates to an underwater cleaning apparatus.

### BACKGROUND ART

Conventionally, an underwater cleaning robot, which cleans a target to be cleaned such as a net for aquaculture or a hull, has been known (for example, see Patent Document 1). When cleaning it using the underwater cleaning robot, a cleaning worker operates the underwater cleaning robot using a remote control box while visually checking from land or shipboard a cleaning state of the net for aquaculture and a traveling direction of the underwater cleaning robot. Other documents relate to an underwater cleaning robot, like Patent Document 2 (US2019085579A1) relates to a pool cleaner control system providing localization and removal of debris from an aquatic environment, Patent Document 3 (US2016244988A1) relates to a pool cleaner configured to use optical sensors to determine whether the robotic pool cleaner is at least partially out-of-water and/or to facilitate optical debris detection, Patent Document 4 (CN114109095A) relates to a swimming pool cleaning robot and a swimming pool cleaning method, belonging to the technical field of automatic control, and Patent Document 5 (CN115390570A) relates to an artificial intelligence-based swimming pool robot management and control system and method.

### PRIOR ART DOCUMENT

### PATENT DOCUMENT

Patent Document 1: Japanese Patent No. 5,242,226

### SUMMARY OF INVENTION

### TECHNICAL PROBLEM

In the conventional cleaning work using the underwater cleaning robot, the cleaning worker was always required to monitor the operation of the underwater cleaning robot in order to prevent the target to be cleaned from being left uncleaned. That is, conventionally, a work load of the cleaning worker was likely to be increased.

An object of the present disclosure is to provide a technique capable of reducing the work load of a cleaning worker at cleaning work in which a target to be cleaned is cleaned under water.

### SOLUTION TO PROBLEM

The invention is defined in claim 1.
An exemplary underwater cleaning apparatus according to the preset disclosure includes a cleaning machine that cleans a target to be cleaned under water, and a controller that generates a cleaning route for cleaning the target to be cleaned. The cleaning machine autonomously travels along the cleaning route.

### ADVANTAGEOUS EFFECTS OF INVENTION

According to the exemplary present disclosure, it is possible to reduce the work load of the cleaning worker at cleaning work in which a target to be cleaned is cleaned under water.

### BRIEF DESCRIPTION OF DRAWINGS

FIG. 1 is a block diagram illustrating a schematic configuration of an underwater cleaning apparatus,
FIG. 2 is a perspective view illustrating a schematic configuration of an autonomous-traveling cleaning machine,
FIG. 3 is a schematically perspective view of the autonomous-traveling cleaning machine as viewed from a direction different from FIG. 2,
FIG. 4 is a side view illustrating a schematic configuration of the autonomous-traveling cleaning machine,
FIG. 5 is a diagram for explaining a cleaning example of a side surface of a net for aquaculture using the underwater cleaning apparatus,
FIG. 6 is a block diagram illustrating a function of a controller provided at the underwater cleaning apparatus,
FIG. 7A is a schematic diagram for explaining a water depth changing route,
FIG. 7B is a schematic diagram for explaining a water depth changing route,
FIG. 8A is a schematic diagram illustrating a captured image captured by a camera mounted on the autonomous-traveling cleaning machine,
FIG. 8B is a schematic diagram illustrating the captured image shown in FIG. 8A, which is subjected to image processing,
FIG. 9 is a diagram for explaining a method of generating a cleaning route according to a first example,
FIG. 10A is a diagram illustrating an image of cleaning route according to a second example,
FIG. 10B is a diagram illustrating an image of image-processed captured image captured by the camera mounted on the autonomous-traveling cleaning machine,
FIG. 11A is a diagram for explaining a method of specifying a turn-back position,
FIG. 11B is a diagram for explaining a method of specifying a turn-back position,
FIG. 12A is a diagram illustrating an image of detection of an uncleaned region,
FIG. 12B is a schematic diagram illustrating an image of image-processed captured image captured by a camera that captures an image in a direction opposite to a traveling direction,
FIG. 13 is a schematic diagram illustrating an image displaying uncleaned regions,
FIG. 14 is a flowchart illustrating a flow of cleaning by autonomous traveling of the underwater cleaning apparatus,
FIG. 15 is a schematic diagram showing another example of a cleaning pattern of the net for aquaculture,
FIG. 16 is a block diagram illustrating a function of a controller according to an alternative embodiment, which is provided at the underwater cleaning apparatus,
FIG. 17A is a diagram for explaining the first twist generated in a connector,
FIG. 17B is a diagram for explaining the second twist generated in the connector,
FIG. 18 is a diagram for explaining a route selection of the autonomous-traveling cleaning machine when cleaning a side surface of the net for aquaculture, and
FIG. 19 is an auxiliary diagram for facilitating the understanding of the details described in FIG. 18.

### DESCRIPTION OF EMBODIMENTS

Now, an exemplary embodiment of the present disclosure will be described in detail with reference to the accompanying drawings. Descriptions of directions in the autonomous-traveling cleaning machine provided at the underwater cleaning apparatus are on the basis of an xyz coordinate system which is a three dimensional orthogonal coordinate system shown in the drawings. In the xyz coordinate system, hereinafter, an x direction, a y direction, and a z direction are defined as a front-rear direction, a left-right direction, and an up-down direction, respectively. +x side and -x side are defined as a front side and a rear side, respectively. +y side and -y side are defined as a left side and a right side, respectively. +z side and -z side are defined as an up side and a down side, respectively. These notations of directions are merely used for the purpose of explanation, and are not intended to limit an actual positional relationship and actual directions.

### 1. Outline of Underwater Cleaning Apparatus

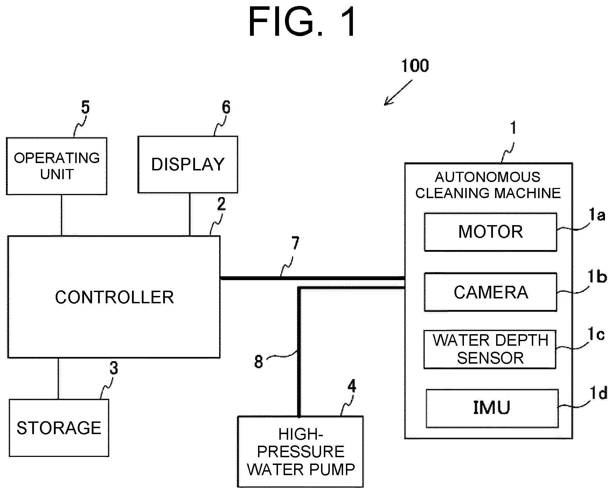

FIG. 1 is a block diagram illustrating a schematic configuration of an underwater cleaning apparatus 100 according to the embodiment of the present disclosure. As shown in FIG. 1, the underwater cleaning apparatus 100 includes an autonomous-traveling cleaning machine 1, a controller 2, a storage 3, a high-pressure water pump 4, an operating unit 5, and a display 6.

The autonomous-traveling cleaning machine 1 cleans a target to be cleaned under water while traveling. In the present embodiment, the target to be cleaned is a net for aquaculture. The net for aquaculture is made of, for example, synthetic fiber or metal. The net for aquaculture has, for example, a cylindrical shape with 30m diameter and 15m depth. However, the shape and size of the net for aquaculture can be appropriately changed. The net for aquaculture may have, for example, a quadrangular prism shape or a truncated cone shape whose diameter decreases from the sea surface side toward the sea bottom side. Furthermore, the target to be cleaned may be, for example, a bridge pier, a hull, a pool, or the like other than the net for aquaculture. In the present embodiment, the cleaning machine which cleans the target to be cleaned is described as an autonomous-traveling cleaning machine, but this is for illustrative purpose only. For example, the cleaning machine may be configured to clean the target to be cleaned while floating or navigating. That is, examples of the cleaning machine of the present disclosure include not only the autonomous-traveling cleaning machine but also a wide variety of cleaning machines traveling by their own power. Examples of the cleaning machine of the present disclosure include a wide variety of cleaning machines that clean the target to be cleaned under water.

As shown in FIG. 1, the autonomous-traveling cleaning machine 1 includes a motor 1a, a camera 1b, a water depth sensor 1c, and an IMU (Inertial Measurement Unit) 1d. The motor 1a provides driving force which allows the autonomous-traveling cleaning machine 1 to travel on the net for aquaculture. The camera 1b is provided to be able to capture an image of surrounding circumstances of the autonomous-traveling cleaning machine 1. The water depth sensor 1c is constituted by a pressure sensor. The water depth sensor 1c capable of detecting a water depth of the autonomous-traveling cleaning machine 1 being at work is disposed at a proper position of the autonomous-traveling cleaning machine 1. The IMU1d capable of detecting a posture of the autonomous-traveling cleaning machine 1 being at work is disposed at a proper position of the autonomous-traveling cleaning machine 1. The IMU1d includes a triaxial angular velocity sensor and a triaxial acceleration sensor. The detailed configuration of the autonomous-traveling cleaning machine 1 will be described later.

The controller 2 controls the whole underwater cleaning apparatus 100. A target to be controlled by the controller 2 includes the operation of the autonomous-traveling cleaning machine 1. The controller 2 may be a processor including an arithmetic circuit such as a CPU (Central Processing Unit). The controller 2 may be configured to include a plurality of processors. In the present embodiment, the controller 2 is disposed on land or shipboard, for example. The controller 2 is electrically connected to the autonomous-traveling cleaning machine 1 with an electric wire bundle 7 formed by bundling a plurality of electric wires including, for example, a communication line and a power supply line. The controller 2 may be mounted on the autonomous-traveling cleaning machine 1. In addition, the controller 2 may be separately mounted on the autonomous-traveling cleaning machine 1 and on another place such as shipboard.

The storage 3 is configured to include a volatile memory and a non-volatile memory. The volatile memory may include, for example, a RAM (Random Access Memory). The non-volatile memory may include, for example, a ROM (Read Only Memory), a flash memory, or a hard disk drive. The non-volatile memory may store a computer-readable program and data. The storage 3 may be configured to be included in the controller 2 or may be provided as a device separate from the controller 2. Similarly to the controller 2, the storage 3 may be mounted on the autonomous-traveling cleaning machine 1
or may be disposed at a place outside the autonomous-traveling cleaning machine 1.

The high-pressure water pump 4 supplies high-pressure water to the autonomous-traveling cleaning machine 1. The high-pressure water pump 4 is disposed on land or shipboard, for example. The high-pressure water pump 4 is connected to the autonomous-traveling cleaning machine 1 with a hose 8. The autonomous-traveling cleaning machine 1 cleans the net for aquaculture by using the high-pressure water supplied from the high-pressure water pump 4 through a hose 8.

The operating unit 5 enables manual operation of the autonomous-traveling cleaning machine 1. The operating unit 5 is electrically connected to the controller 2. The controller 2 controls the operation of the autonomous-traveling cleaning machine 1 in response to an operation command issued by a cleaning worker using the operating unit 5. The operating unit 5 also enables selection of an operation mode of the autonomous-traveling cleaning machine 1. Specifically, the operating unit 5 is provided in a selectable manner between a manual mode and an autonomous mode. When the manual mode is selected, the cleaning worker can manually operate the autonomous-traveling cleaning machine 1 using the operating unit 5. When the autonomous mode is selected, the autonomous-traveling cleaning machine 1 cleans the net for aquaculture while autonomously traveling. The operating unit 5 is disposed on land or shipboard so that the cleaning worker can operate it.

The display 6 is constituted by a display device such as a liquid crystal display, and is electrically connected to the controller 2. Similarly to the operating unit 5, the display 6 is disposed on land or shipboard. For example, the display 6 is provided so that an image captured by the camera 1b mounted on the autonomous-traveling cleaning machine 1 can be displayed. Furthermore, the display 6 is provided so that an image generated by the controller 2 can be displayed. Note that the display 6 may be directly connected to the camera 1b without interposing the controller 2.

### 2. Outline of Autonomous-traveling Cleaning Machine

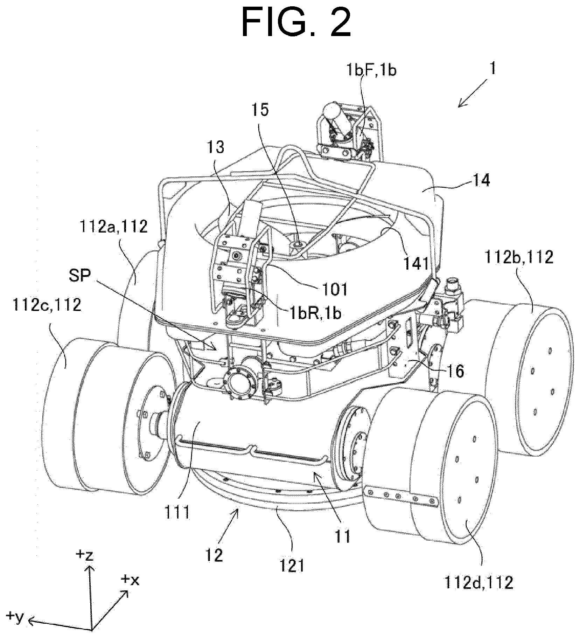

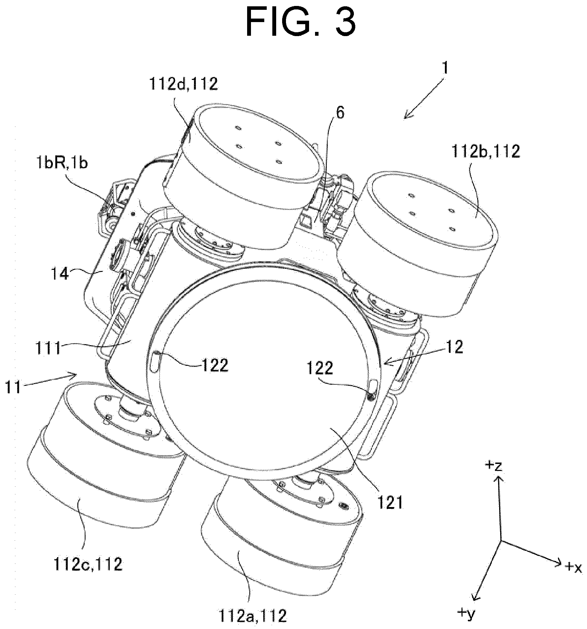

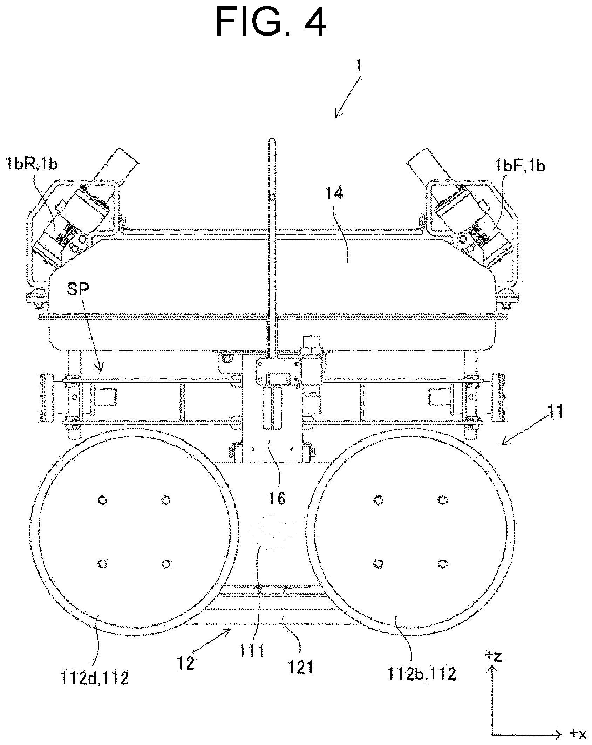

FIG. 2 is a perspective view illustrating a schematic configuration of an autonomous-traveling cleaning machine 1 according to the embodiment of the present disclosure. FIG. 3 is a schematically perspective view of the autonomous-traveling cleaning machine 1 according to the embodiment of the present disclosure, as viewed from a direction different from FIG. 2. FIG. 2 is a view of the autonomous-traveling cleaning machine 1 as viewed obliquely from above. FIG. 3 is a view of the autonomous-traveling cleaning machine 1 as viewed obliquely from below. FIG. 4 is a side view illustrating a schematic configuration of the autonomous-traveling cleaning machine 1 according to the embodiment of the present disclosure. FIG. 4 is a view of the autonomous-traveling cleaning machine 1 as viewed from the right side.

As shown in FIGS. 2 to 4, the autonomous-traveling cleaning machine 1 includes a traveling unit 11, a cleaning unit 12, a propeller 13, and an annular body 14.

The traveling unit 11 includes a traveling unit main body 111 and four wheels 112. Specifically, the four wheels 112 consist of a left front wheel 112a, a right front wheel 112b, a left rear wheel 112c, and a right rear wheel 112d. Each of wheels 112 is disposed on a side of the traveling unit main body 111 so that rotational power from a separate motor 1a disposed inside the traveling unit main body 111 can be transmitted to the wheel. In other words, the motor 1a disposed inside the traveling unit main body 111 includes a motor for the left front wheel 112a, a motor for the right front wheel 112b, a motor for the left rear wheel 112c, and a motor for the right rear wheel 112d. Each of wheels 112 is separately rotated by the driving force from each of motors 1a. Each of motors 1a is connected to a signal line and a power supply line which are included in the electric wire bundle 7 described above (see FIG. 1).

By causing the motors 1a to rotate in the same direction at the same rotation speed, the traveling unit 11 can move straight in the front-rear direction. That is, the traveling unit 11 travels straight in the front-rear direction. Whether the traveling unit 11 travels forward or backward depends on the rotation direction of the motors 1a. Furthermore, for example, when the traveling unit 11 is traveling forward, if a rotation speed of the motor for the right side wheel 112b and a rotation speed of the motor for the right side wheel 112d are increased so as to become greater than that of the motor for the left side wheel 112a and that of the motor for the left side wheel 112c, the traveling unit 11 turns to the left direction. Conversely, if a rotation speed of the motor for the left side wheel 112a and a rotation speed of the motor for the left side wheel 112c are increased so as to become greater than that of the motor for the right side wheel 112b and that of the motor for the right side wheel 112d, the traveling unit 11 turns to the right direction.

Even when the traveling unit 11 is traveling backward, the traveling direction can be changed in the same manner. Furthermore, when the motors for the left side wheels 112a and 112c, and the motors for the right side wheels 112b and 112d are rotated so that a rotation direction of the former and a rotation direction of the latter become opposite to each other, the traveling unit 11 can also be pivotally turned (ultra-pivotal turn). The number of motors accommodated inside the traveling unit main body 111 is not limited to four, and may be two, for example. For example, the present embodiment may be configured to include two motors which consist of the motor for the left front wheel 112a and the motor for the right front wheel 112b. In this configuration, the left front wheel 112a and the left rear wheel 112c may be connected to each other by a belt mechanism or a chain mechanism, and the right front wheel 112b and the right rear wheel 112d may be similarly connected to each other by the belt mechanism or the chain mechanism.

The cleaning unit 12 is disposed below the traveling unit 11 to clean a target to be cleaned. Specifically, the cleaning unit 12 jets a high-pressure water supplied from the high-pressure water pump 4 via the hose 8 toward the net for aquaculture which is the target to be cleaned, and clean the net for aquaculture with a jet flow generated by the jet.

The cleaning unit 12 has a disc-shaped rotating body 121. The rotating body 121 is attached to a lower end portion of a rotating shaft 15 extending in the up-down direction and rotates together with the rotating shaft 15. The rotating shaft 15 is rotatably supported by the traveling unit main body 111. Specifically, the rotating shaft 15 is rotatably supported by a rotary joint (not shown) disposed inside the traveling unit main body 111. The high-pressure water supplied from the high-pressure water pump 4 to the rotary joint is fed to cleaning nozzles 122 disposed on a bottom surface of the rotating body 121 through the rotating shaft 15 and the rotating body 121. In the present embodiment, the number of cleaning nozzles 122 is two. However, the number of cleaning nozzles 122 may be changed as appropriate.

The cleaning nozzles 122 are arranged to be downwardly inclined by a predetermined angle so that a jet of the high-pressure water from the cleaning nozzle 122 is directed toward the surface of the net for aquaculture at cleaning. When the high-pressure water is jetted from the cleaning nozzles 122, the rotating body 121 is rotated together with the rotating shaft 15 by a jet counterforce generated by the jet of the high-pressure water. The cleaning unit 12 jets the high-pressure water to the surface of the net for aquaculture while rotating about the rotating shaft 15, thereby broadly removing seaweeds, algae, shellfishes and the like adhered to the net for aquaculture.

The propeller 13 is disposed above the traveling unit 11. The propeller 13 is attached to an upper end portion of the rotating shaft 15. The propeller 13 rotates together with the rotating shaft 15. When the high-pressure water is jetted from the cleaning nozzle 122, the rotating shaft 15 is rotated together with the rotating body 121 by the jet counterforce as well as the propeller 13 is also rotated. The rotation of the propeller 13 generates a thrust for pressing the traveling unit 11 against the target to be cleaned.

The annular body 14 surrounds the propeller 13. The annular body 14 has an annular shape with a large-diameter opening 141 at the center thereof in a plan view in the up-down direction. The propeller 13 is disposed inside the opening 141 of the annular body 14. Specifically, the annular body 14 is connected to the traveling unit 11 by a connecting member 16 disposed between the traveling unit main body 111 and the annular body 14 in the up-down direction. The connecting member 16 is a column extending in the up-down direction. In the present embodiment, the number of connecting members 16 is two so that the two connecting members 16 are each disposed at the center of traveling unit main body 111 in the front-rear direction. One of the two connecting members 16 is disposed at the left end portion of the traveling unit main body 111, and the other of the same is disposed at the right end portion of the traveling unit main body 111.

The annular body 14 functions as a float. Since the annular body 14 which functions as a float is provided, the autonomous-traveling cleaning machine 1 can float when it is put into water. In the present embodiment, when the autonomous-traveling cleaning machine 1 is put into water, the autonomous-traveling cleaning machine 1 takes a posture in which the annular body 14 is on the up side and the traveling unit 11 is on the down side, and floats so that the top surface of the annular body 14 is at substantially the same level as water surface. In a state where the autonomous-traveling cleaning machine 1 is floating, the propeller 13 is under water.

In the present embodiment, cameras 1b are attached to the front end portion and the rear end portion of the annular body 14, respectively. That is, the underwater cleaning apparatus 100 includes the cameras 1b mounted on the autonomous-traveling cleaning machine 1. The cameras 1b include a front camera 1bF that captures a front side image of the autonomous-traveling cleaning machine 1 and a rear camera 1bR that captures a rear side image of the same. The number and arrangement of the cameras 1b may be changed as appropriate.

The traveling unit 11 and the annular body 14 are separated from each other in the up-down direction, and an introduction space SP, which functions as a water introduction path, is formed between the traveling unit 11 and the annular body 14 in the up-down direction. When the propeller 13 rotates, water is introduced from the introduction space SP toward the propeller 13, so that a water flow occurs to cause water to blow out of the opening 141. The water flow occurred by the rotation of the propeller 13 generates a thrust for the autonomous-traveling cleaning machine 1, whereby each of wheels 112 is brought in contact with the net for aquaculture at a predetermined pressure and such a state is maintained.

### 3. Outline of Cleaning using Underwater Cleaning Apparatus

When the net for aquaculture is cleaned using the underwater cleaning apparatus 100, the autonomous-traveling cleaning machine 1 is put into a space for aquaculture (under water) surrounded by the net for aquaculture by using a crane from land or shipboard. Upon put into water, the autonomous-traveling cleaning machine 1 floats. Then, the high-pressure water is supplied to the cleaning unit 12 of the autonomous-traveling cleaning machine 1 through the hose 8 by operating the high-pressure water pump 4. This allows the propeller 13 to be rotated together with the cleaning unit 12. The autonomous-traveling cleaning machine 1 is pressed against the net for aquaculture by the thrust generated by the rotation of the propeller 13. In this state, when the motors 1a are driven to rotate the wheels 112, the autonomous-traveling cleaning machine 1 travels along the surface of the net for aquaculture. Since the high-pressure water is jetted from the cleaning nozzles 122 while the cleaning unit 12 is rotating during traveling, the net for aquaculture can be broadly cleaned.

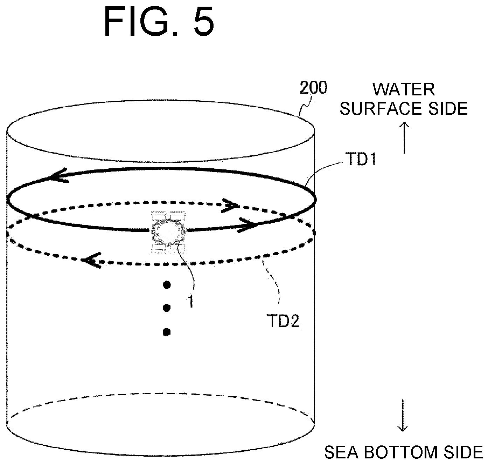

FIG. 5 is a diagram for explaining a cleaning example of a side surface of the net for aquaculture 200 using the underwater cleaning apparatus 100 according to the embodiment of the present disclosure. When the side surface of the net for aquaculture 200 is cleaned, the autonomous-traveling cleaning machine 1 is moved to a start position by a manual moving (manual traveling in the present embodiment) using the operating unit 5. The start position is set to a portion of the net for aquaculture 200 in the vicinity of the sea water surface. The autonomous-traveling cleaning machine 1 starts cleaning by an autonomous moving (autonomous traveling in the present embodiment) from the start position.

**In** the example shown in FIG. 5, the autonomous-traveling cleaning machine 1 moves forward or backward while maintaining a constant water depth (target water depth) from the start position. The trace of the net for aquaculture 200, on which the autonomous-traveling cleaning machine 1 travels, is cleaned by the operation of the cleaning unit 12. The autonomous-traveling cleaning machine 1 circulates along the inner circumferential surface of the net for aquaculture 200 while maintaining the constant water depth.

After the autonomous-traveling cleaning machine 1 circulates once along the inner circumferential surface of the net for aquaculture 200, the autonomous-traveling cleaning machine 1 deepens its own depth level up to a next target water depth which is deeper than the current water depth. In the example shown in FIG. 5, changing from the target water depth TD1 depicted by a thick line to the next target water depth TD2 depicted by the broken line corresponds to an example of a change of the target water depth. Then, the autonomous-traveling cleaning machine 1 circulates once along the inner circumferential surface of the net for aquaculture 200 while maintaining the changed target water depth. At this time, the autonomous-traveling cleaning machine 1 travels in a traveling direction opposite to a previous traveling direction at the previous target water depth. For example, if the previous traveling direction is a counterclockwise direction, the current traveling direction is a clockwise direction, and vice versa. In this way, changing reversely the traveling direction suppresses the hose 8 or the like extending from the autonomous-traveling cleaning machine 1 from being twisted.

The autonomous-traveling cleaning machine 1 repeats the circulating operation while maintaining the target water depth and the change of the target water depth, alternately. This allows the autonomous-traveling cleaning machine 1 to clean the side surface of the net for aquaculture 200 from the end portion on the sea surface side to the end portion on the sea bottom side. As can be seen from the above description, in the present embodiment, for every time when the autonomous-traveling cleaning machine 1 circulates once along the inner circumferential surface of the net for aquaculture 200, it turns back to the opposite traveling direction while changing the target water depth at that position. From this point of view, a position at which the autonomous-traveling cleaning machine 1 completes the circulation of the inner circumferential surface may be hereinafter referred to as a turn-back position.

### 4. Function of Controller

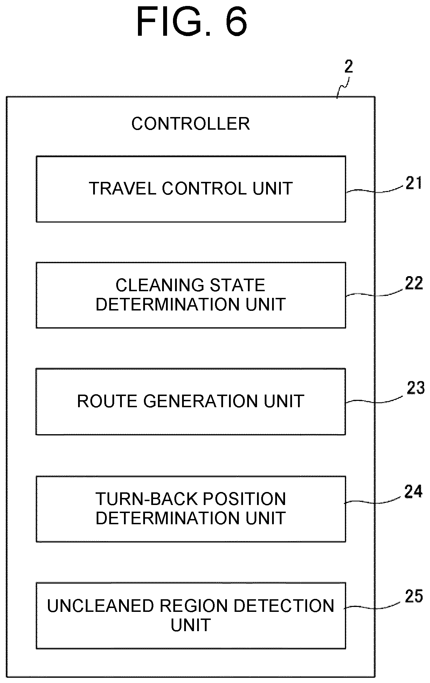

Next, functions of the controller 2 provided at the underwater cleaning apparatus 100 will be described. FIG. 6 is a block diagram illustrating functions of the controller 2 provided at the underwater cleaning apparatus 100. As illustrated in FIG. 6, the controller 2 includes, as its functions, a travel control unit 21, a cleaning state determination unit 22, a route generation unit 23, a turn-back position determination unit 24, and an uncleaned region detection unit 25. In the present embodiment, the functions of the controller 2 are realized by an arithmetic circuit such as a CPU executing an arithmetic process in accordance with a program stored in the storage 3.

Each of functional units 21 to 25 may be collectively realized by one program, but may be realized by a plurality of programs such that each functional unit is realized by a separate program, for example. In addition, each of the functional units 21 to 25 may be realized by a separate arithmetic unit.

Furthermore, each of the functional units 21 to 25 may be realized by causing the processor such as a CPU to execute the program, i.e., by the software, as described above, but may also be realized by another method. At least one of the functional units 21 to 25 may be realized using, for example, an ASIC (Application Specific Integrated Circuit), an FPGA (Farm field Programmable Gate Array), or the like. That is, each of the functional units 21 to 25 may be realized by hardware using a dedicated IC or the like. Furthermore, each of the functional units 21 to 25 may be realized using a combination of software and hardware. Moreover, each of the functional units 21 to 25 is a conceptual constituent element. The function performed by one constituent element may be distributed into multiple constituent elements. Still further, the functions possessed by the multiple constituent elements may be integrated into a single constituent element.

The travel control unit 21 performs the travel control of the autonomous-traveling cleaning machine 1 according to an operation mode selected using the operating unit 5. If the operation mode is the manual mode, the travel control unit 21 performs the travel control of the autonomous-traveling cleaning machine 1 in accordance with a command issued by the cleaning worker using the operating unit 5. On the other hand, if the operation mode is the autonomous mode, the travel control unit 21 performs the travel control of the autonomous-traveling cleaning machine 1 so as to travel along the cleaning route generated by the route generation unit 23. That is, in the underwater cleaning apparatus 100 according to the present embodiment, the autonomous-traveling cleaning machine 1 autonomously travels along the cleaning route generated by the controller 2. Following the autonomous traveling of the autonomous-traveling cleaning machine 1, the trace of the net for aquaculture, on which the autonomous-traveling cleaning machine 1 travels, can be autonomously cleaned. This makes it possible to reduce the work load of the cleaning worker.

For example, in the cleaning example of the side surface of the net for aquaculture 200 shown in FIG. 5, the cleaning route includes a route which causes the autonomous-traveling cleaning machine 1 to circulate once along the inner circumferential surface of the net for aquaculture 200 while maintaining the target water depth (water depth maintained route). When the autonomous-traveling cleaning machine 1 travels along the water depth maintained route, the travel control unit 21 uses information from the water depth sensor 1c and the IMU 1d (see FIG. 1) to perform the control such that the autonomous-traveling cleaning machine 1 circulates along the inner circumferential surface of the net for aquaculture 200 while maintaining the target water depth.

More specifically, when the autonomous-traveling cleaning machine 1 positions at a level within a predetermined range with respect to the target water depth, the control for decreasing the speed of one side wheel 112 of the left and right wheels 112 is performed so that a yaw angle of the autonomous-traveling cleaning machine 1 obtained from the IMU 1d becomes zero degrees (control for maintaining the horizontality). Furthermore, when the autonomous-traveling cleaning machine 1 positions at a level out of the predetermined range with respect to the target water depth, the control for changing the traveling direction of the autonomous-traveling cleaning machine 1 and returning the water depth to the target water depth is performed so as to return to the target water depth. After returning to the target water depth, the above-described control for maintaining the horizontality is performed.

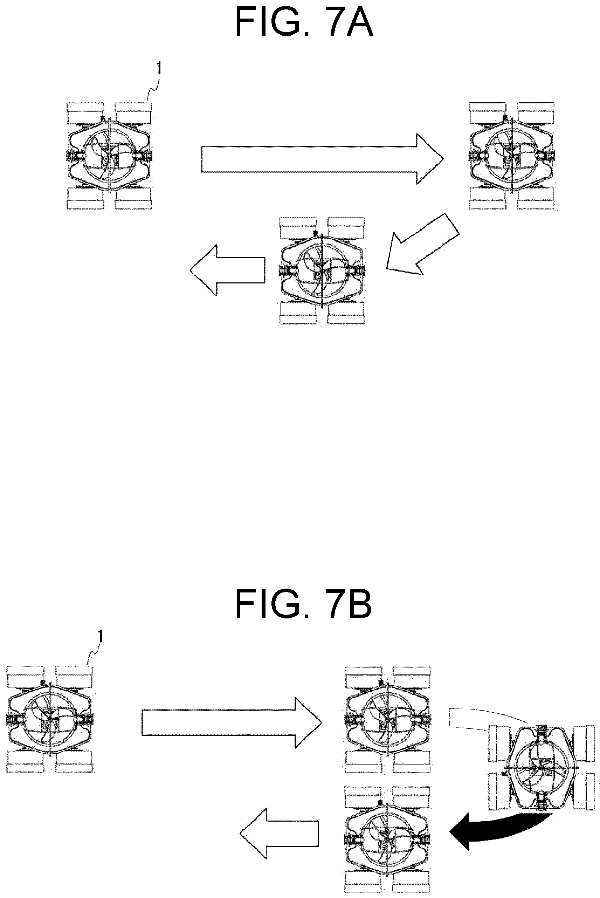

Furthermore, in the cleaning example of the side surface of the net for aquaculture 200 shown in FIG. 5, the cleaning route includes a route which deepens the water depth of the autonomous-traveling cleaning machine 1 while reversing the traveling direction of the same (water depth changing route). FIGS. 7A and 7B are schematic diagrams for explaining the water depth changing route. FIGS. 7A and 7B illustrate different types of depth change routes.

In the example shown in FIG. 7A, the travel control unit 21 temporarily causes the autonomous-traveling cleaning machine 1 to stop at the turn-back position. Then, the travel control unit 21 causes the autonomous-traveling cleaning machine 1 to tilt with respect to the horizontal direction (change the yaw angle from zero degrees to a predetermined angle) by rotating the left and right wheels of the autonomous-traveling cleaning machine 1 in the directions opposite to each other. When the autonomous-traveling cleaning machine 1 is tilted by a predetermined angle with respect to the horizontal direction, the travel control unit 21 causes the autonomous-traveling cleaning machine 1 to travel in a direction opposite to the traveling direction before stopping and to travel to the next target water depth. When the autonomous-traveling cleaning machine 1 reaches the next target water depth, the travel control unit 21 causes the autonomous-traveling cleaning machine 1 to direct to the horizontal direction (yaw angle is zero degrees) by rotating the left and right wheels of the autonomous-traveling cleaning machine 1 in the rotation directions opposite to each other. When the autonomous-traveling cleaning machine 1 is directed to the horizontal direction, the travel control unit 21 causes the autonomous-traveling cleaning machine 1 to travel along the water depth maintained route of the next target water depth.

In such a configuration that the autonomous-traveling cleaning machine 1 has only the front camera 1bF, the travel control unit 21 may cause the autonomous-traveling cleaning machine 1 to make an ultra-pivotal turn, a pivotal turn, or the like for reversing the front-rear direction of the same after causing the autonomous-traveling cleaning machine 1 to temporarily stop at the turn-back position.

**In** the example shown in FIG. 7B, the travel control unit 21 causes the autonomous-traveling cleaning machine 1 to make a U-turn at the turn-back position. When the autonomous-traveling cleaning machine 1 is traveling with the right side of its own body facing the sea bottom side, the travel control unit 21 causes the autonomous-traveling cleaning machine 1 to turn right. Then, the travel control unit 21 causes the autonomous-traveling cleaning machine 1 to change a posture by turning right so that the cleaning travel at the next target water depth can be performed. When the autonomous-traveling cleaning machine 1 is traveling with the left side of its own body facing the sea bottom side, the travel control unit 21 causes the autonomous-traveling cleaning machine 1 to turn left. Then, the travel control unit 21 causes the autonomous-traveling cleaning machine 1 to change a posture by turning left so that the cleaning travel at the next target water depth can be performed.

The cleaning state determination unit 22 (see FIG. 6) acquires the captured image from the camera 1b. Then, the cleaning state determination unit 22 determines the cleaning state of the net for aquaculture based on the captured image captured by the camera 1b. That is, the controller 2 determines the cleaning state of the target to be cleaned based on the captured image captured by the camera 1b. In the present embodiment, the cleaning state of the net for aquaculture can be determined based on the captured images captured by the front camera 1bF and the rear camera 1bR. By determining the cleaning state, it is possible to detect, for example, a cleaned trace indicating that cleaning is performed or an uncleaned region left in a region which is essentially to be cleaned.

For example, as a method of detecting the cleaned trace, a method of dividing the image region into a pre-cleaning region and a post-cleaning region and detecting a boundary between the pre-cleaning region and the post-cleaning region, a method of directly detecting a boundary between the pre-cleaning region and the post-cleaning region by detecting an edge line in the captured image, or the like can be used. As a method of dividing the image region, for example, a rule-based division method using a feature amount of an image or a method such as a semantic segmentation using a deep learning technique can be used.

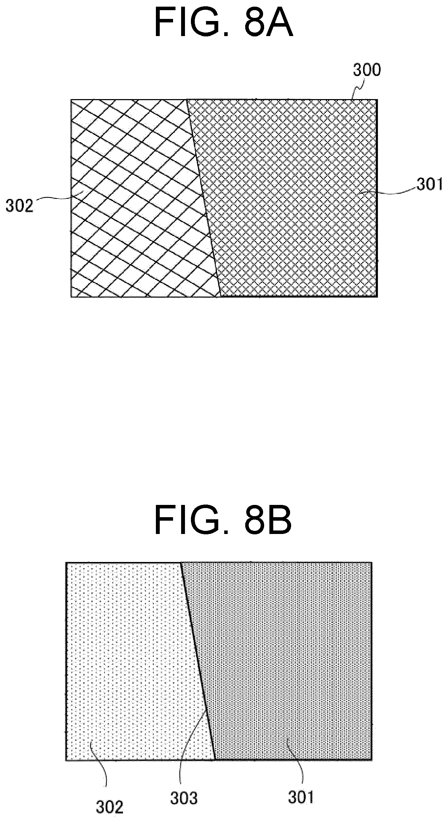

FIG. 8A is a schematic diagram illustrating a captured image 300 captured by the camera 1b mounted on the autonomous-traveling cleaning machine 1. A pre-cleaning region 301 and a post-cleaning region 302 are viewed in the captured image 300 shown in FIG. 8A. **In** the pre-cleaning region 301, the net for aquaculture 200 is covered with seaweed, algae, shellfish, and the like. **In** the post-cleaning region 302, seaweed, algae, shellfish, and the like are removed, and the net for aquaculture 200 is clearly viewed.

FIG. 8B is a schematic diagram illustrating the captured image 300 shown in FIG. 8A, which is subjected to image processing. Specifically, the image processing in FIG. 8B is a semantic segmentation. The semantic segmentation allows a boundary line 303 that divides the image region into the pre-cleaning region 301 and the post-cleaning region 302 to be obtained. That is, the cleaned trace which is the post-cleaning region 302 can be detected by the image processing.

The route generation unit 23 (see FIG. 6) generates a cleaning route for cleaning the net for aquaculture. That is, the controller 2 generates the cleaning route for cleaning the target to be cleaned. Hereinafter, two examples of a method of generating the cleaning route by the route generation unit 23 will be described.

First, a first example of the method of generating the cleaning route will be described. In the first example, the autonomous-traveling cleaning machine 1°s own underwater level is estimated based on the information obtained from the water depth sensor 1c and IMU 1d (see FIG. 1), and the cleaning route is generated. In the method of generating a cleaning route of the first example, a shape of the net for aquaculture (for example, the top surface diameter, the bottom surface diameter, the depth, and the like), a cleaning width of the autonomous-traveling cleaning machine 1 (the cleaning range in the left-right direction), an overlap width required at cleaning, and the current water depth are used as the input information. Note that the overlap width is an amount set in advance in consideration of an error in position control during cleaning of the autonomous-traveling cleaning machine 1, and is obtained by, for example, an experiment, a simulation, or the like.

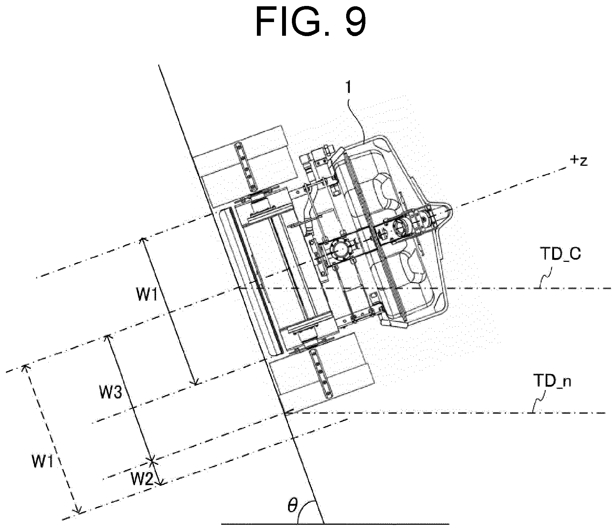

FIG. 9 is a diagram for explaining a method of generating a cleaning route according to a first example. In FIG. 9, TD_C indicates the current target water depth, and TD_n indicates the target water depth of the next cleaning route (the next target water depth). W1 indicates a cleaning width of the autonomous-traveling cleaning machine 1. W2 indicates an overlap width. θ is an inclination angle of a side surface of the net for aquaculture. The inclination angle θ is given by, for example, a mean value of a roll angle of the autonomous-traveling cleaning machine 1, which is obtained by the IMU 1d when the autonomous-traveling cleaning machine 1 travels at the current target water depth. When the next target water depth TD_n is obtained, a route to circulate along the inner circumferential surface of the net for aquaculture while maintaining the target water depth is generated as the next cleaning route. Note that an initial cleaning route is a route to circulate along the inner circumferential surface of the net for aquaculture while maintaining the target water depth as the current water depth is the target water depth.

As shown in FIG. 9, the next target water depth TD_n can be obtained using the current target water depth TD_C, the cleaning width W1, the overlap width W2, and the inclination angle θ. In FIG. 9, W3 is an offset width obtained by subtracting the overlap width W2 from the cleaning width W1. The next target water depth TD_n is obtained from the offset width W3 and the inclination angle θ. Specifically, the next target water depth TD_n is obtained by adding a value obtained by multiplying the offset width W3 by sinθ to the current target water depth.

The end position of the cleaning route determined by the target water depth TD_n can be obtained from, for example, shape data of the net for aquaculture and the target water depth TD_n. The length of the inner circumference of the net for aquaculture at the target water depth TD_n is obtained from the shape data of the net for aquaculture. The end position of the cleaning route can be calculated from the length of the inner circumference of the net for aquaculture and the start position of the cleaning route.

Next, a second example of the method of generating the cleaning route will be described. In a second example, the cleaning route is generated based on an image captured by camera 1b. Note that the camera 1b used to generate the cleaning route is the front camera 1bF or the rear camera 1bR depending on a forward or backward traveling direction of the autonomous-traveling cleaning machine 1.

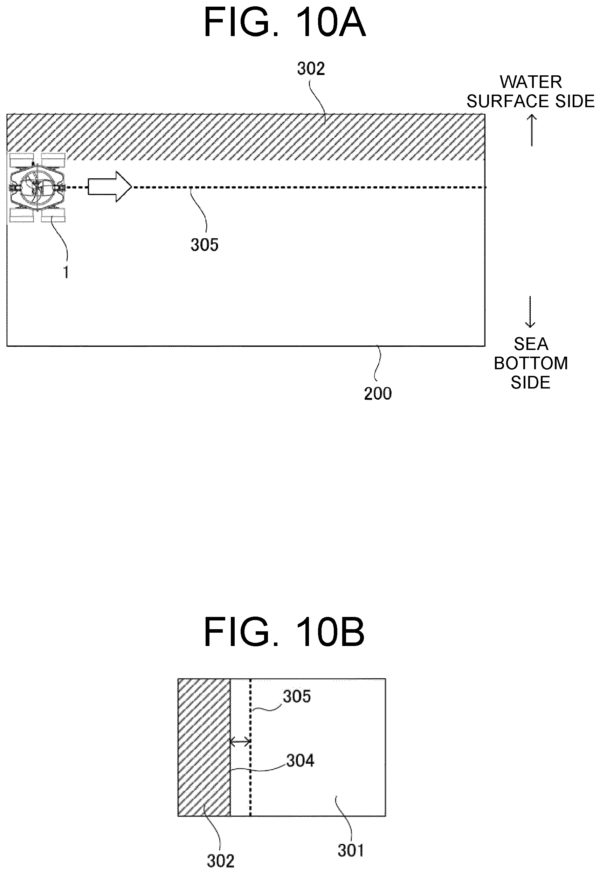

FIG. 10A is a diagram illustrating an image of the cleaning route according to a second example. In FIG. 10A, a broken line indicates a cleaning route 305 set on a side surface of the net for aquaculture 200. As shown in FIG. 10A, in the second example, the cleaning route 305 is generated such that the autonomous-traveling cleaning machine 1 travels along and adjacently to the cleaned trace 302. Note that the cleaning route set to perform the travel along and adjacently to the cleaned trace 302 is not necessary to be a route for maintaining the water depth.

FIG. 10B is a diagram illustrating an image of image-processed captured image capture by the camera 1b mounted on the autonomous-traveling cleaning machine 1. As described above, the image processing is, for example, semantic segmentation. The route generation unit 23 detects a straight line 304 forming a boundary between the cleaned trace 302 and the pre-cleaning region 301. Then, the route generation unit 23 sets the cleaning route 305 at a position shifted from the detected straight line 304 by an offset amount preset in consideration of the cleaning width W1 (see FIG. 9) of the autonomous-traveling cleaning machine 1. The route generation unit 23 generates the cleaning route 305 at any time according to the acquisition of the captured images sequentially obtained in time series.

The straight line 304 forming the boundary between the cleaned trace 302 and the pre-cleaning region 301 may not be obtained from the captured image. For example, the straight line 304 forming the boundary is not obtained at the start of cleaning of the net for aquaculture 200. Furthermore, even when the cleaned trace 302 is detected, the straight line 304 forming the boundary may not be obtained. In a case where the straight line 304 forming the boundary is not obtained, for example, it may be configured so that a cleaning route along which the autonomous-traveling cleaning machine 1 travels while maintaining the current water depth is generated. Then, it may be configured so that upon the straight line 304 forming the boundary is detected, a cleaning route for traveling along and adjacently to the cleaned trace 302 is generated.

In the present embodiment, the underwater cleaning apparatus 100 preferably employs the method of generating a cleaning route according to the second example. That is, the controller 2 generates the cleaning route 305 based on the cleaned trace 302 obtained by the determination of the cleaning state using the captured image captured by the camera 1b. When the controller 2 cannot generate the cleaning route 305 based on the cleaned trace 302, it generates the cleaning route with the water depth as a reference. Specifically, the water depth as a reference may be a water depth (current water depth) at which the autonomous-traveling cleaning machine 1 is present at the time when it is determined that the cleaning route 305 cannot be generated based on the cleaned trace 302.

The net for aquaculture 200 is likely to undergo a change in shape, such as bending, due to waves, tidal currents, or the like. **In** particular, when the net for aquaculture 200 is made of chemical fibers, the change in shape such as bending is more likely to occur. Therefore, when the autonomous-traveling cleaning machine 1 cleans the net for aquaculture 200, it is not necessarily easy to accurately detect the position of the same on the net for aquaculture 200. In this regard, in the present embodiment, the cleaning route 305 along and adjacently to the cleaned trace 302 obtained from the captured image captured by the camera 1b is generated, and the autonomous-traveling cleaning machine 1 cleans the net for aquaculture 200 by traveling following the cleaning route. That is, when the net for aquaculture 200 is cleaned, it is not necessary to always detect an accurate position of the autonomous-traveling cleaning machine 1 on the net for aquaculture 200. For this reason, according to the configuration of the present embodiment, it is possible to set a cleaning route with less uncleaned regions regardless of the change in shape of the net for aquaculture 200. In addition, since it is possible to reduce the influence of a change in shape such as bending, the overlap width in consideration of the error of the position control described above can be decreased. This makes it possible to improve the cleaning efficiency.

Furthermore, it may be difficult to recognize the cleaned trace 302 of the net for aquaculture 200 as a cleaned trace from the image depending on the contamination degree thereof. For this reason, the recognizable cleaned traces 302 are distributed in a mottled manner over the image, and it may be difficult to generate the cleaning route 305 that enables the autonomous-traveling cleaning machine 1 to travel along and adjacently to the cleaned traces 302. In this regard, in the present embodiment, in a case where it is difficult to generate the cleaning route 305 that enables the autonomous-traveling cleaning machine 1 to travel along and adjacently to the cleaned trace 302, it may be configured so that the cleaning route is generated with the water depth as a reference. This makes it possible to prevent an event in which the autonomous-traveling cleaning machine 1 cannot obtain a cleaning route and thus stops the autonomous traveling in the middle from happening.

The generation of the cleaning route for autonomously traveling on the side surface of the net for aquaculture 200 is described above. Similarly, in the case where the autonomous-traveling cleaning machine 1 autonomously travels on the bottom surface of the net for aquaculture 200, the cleaning route may be generated such that the autonomous-traveling cleaning machine 1 travels along and adjacently to the cleaned trace 302.

In the present embodiment, the cleaning route for cleaning the net for aquaculture 200 includes the turn-back position where the traveling direction is reversed. The turn-back position determination unit 24 (see FIG. 6) specifies the turn-back position based on the cleaned trace obtained by the determination of the cleaning state using the captured image captured by the camera 1b. That is, the controller 2 specifies the turn-back position where the traveling direction of the autonomous-traveling cleaning machine 1 is reversed based on the cleaned trace obtained by the determination of the cleaning state. By specifying the turn-back position using the captured image, the autonomous-traveling cleaning machine 1 can autonomously perform a turn-back operation so that the traveling direction is reversed while changing the water depth of itself. That is, it is possible to reduce the monitoring burden on the cleaning worker.

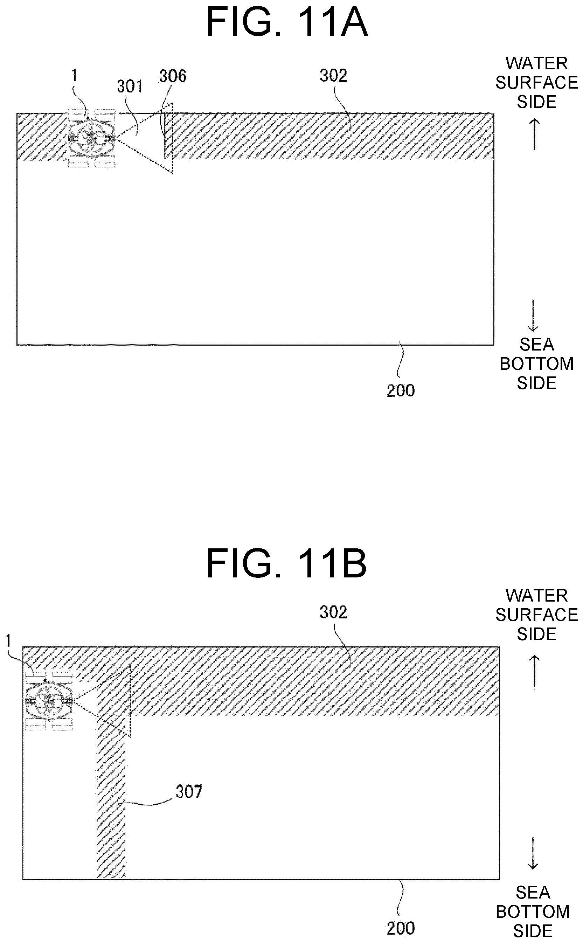

FIGS. 11A and 11B are diagrams for explaining methods of specifying a turn-back position. The method of specifying the turn-back position shown in FIG. 11A is different from that shown in FIG. 11B. In FIGS. 11A and 11B, it is assumed that the autonomous-traveling cleaning machine 1 travels for cleaning the net for aquaculture 200 while repeating circulation along the inner circumferential surface of the net for aquaculture 200 and changing the water depth after the circulation.

In the example shown in FIG. 11A, the turn-back position determination unit 24 specifies the turn-back position by using a captured image obtained by the camera 1b that captures an image in the traveling direction when circulating along the inner circumferential surface of the net for aquaculture 200. Specifically, the turn-back position determination unit 24 specifies the turn-back position by detecting a boundary line 306 between the cleaned trace 302 and the pre-cleaning region 301 in the captured image. More specifically, the turn-back position determination unit 24 specifies the turn-back position by detecting a boundary line 306 leading in a direction intersecting (for example, orthogonal to) the traveling direction. The turn-back position may be, for example, the position of the boundary line 306, or may be a position offset from the boundary line 306 by a predetermined amount in the traveling direction.

In the example shown in FIG. 11A, the turn-back position determination unit 24 may determine the turn-back position in consideration of the relationship between a circulation distance of the net for aquaculture 200 calculated in advance and a travel distance from the start of circulation of the autonomous-traveling cleaning machine 1. The travel distance from the start of circulation of the autonomous-traveling cleaning machine 1 may be obtained from, for example, the number of rotations (rotation speed) of the wheels 112 and a traveling time, or may be obtained from the position information of the autonomous-traveling cleaning machine 1 specified by the water depth sensor 1c and IMU 1d. When the travel distance of the autonomous-traveling cleaning machine 1 does not reach the circulation distance obtained from a shape of the net for aquaculture or a predetermined amount determined based on the circulation distance, it may be configured not to perform the determination of the turn-back position even when the cleaned trace 302 is detected from the captured image. This makes it possible to reduce the occurrence of the erroneous determination of the turn-back position caused by a detection error of the cleaned trace 302.

Also in the example shown in FIG. 11B, similarly to the example shown in FIG. 11A, the turn-back position determination unit 24 specifies the turn-back position by using the captured image obtained by the camera 1b that captures the image in the traveling direction when the autonomous-traveling cleaning machine 1 circulates along the inner circumferential surface of the net for aquaculture 200. However, in the example shown in FIG. 11B, the turn-back position determination unit 24 detects a mark 307 formed in advance by the manual operation of the autonomous-traveling cleaning machine 1, and specifies the position of the detected mark as the turn-back position. This point makes the example shown in FIG. 11B different from the example shown in FIG. 11A.

In the example shown in FIG. 11B, the mark 307 is a cleaned trace obtained by causing the autonomous-traveling cleaning machine 1 to vertically travel by the manual operation from the end portion on the water surface side of the net for aquaculture 200 to the end portion on the sea bottom side. For example, the turn-back position determination unit 24 determines as the mark 307 a cleaned trace which leads by a predetermined width or more in a direction orthogonal to the traveling direction, and specifies the turn-back position.

In the present embodiment, the turn-back position determination unit 24 is configured to specify the turn-back position by using the captured image captured by the camera 1b, but this is for illustrative purposes only. For example, the turn-back position determination unit 24 may determine the turn-back position according to the travel distance of the autonomous-traveling cleaning machine 1. Furthermore, the turn-back position may be determined according to the amount of change in an azimuth angle of the autonomous-traveling cleaning machine 1. The azimuth angle is defined as an angle in a rotational direction with respect to an axis which passes through the center of the net for aquaculture 200 and extends in the vertical direction. When the autonomous-traveling cleaning machine 1 circulates along the inner circumferential surface of the net for aquaculture 200, the azimuth angle changes by 360 degrees. The turn-back position determination unit 24 may detect the turn-back position when the travel distance of the autonomous-traveling cleaning machine 1 is not less than a target distance and the azimuth angle changes by an amount not less than a target change amount (for example, 360 degrees).

The uncleaned region detection unit 25 (see FIG. 6) detects the uncleaned region by determining the cleaning state using the captured image captured by the camera 1b. Then, the uncleaned region detection unit 25 stores the detected uncleaned region in the storage 3 (see FIG. 1). That is, the controller 2 stores the uncleaned region detected by the determination of the cleaning state in the storage 3. Since information of the uncleaned region is stored in the storage 3, the information of the uncleaned region can be easily used.

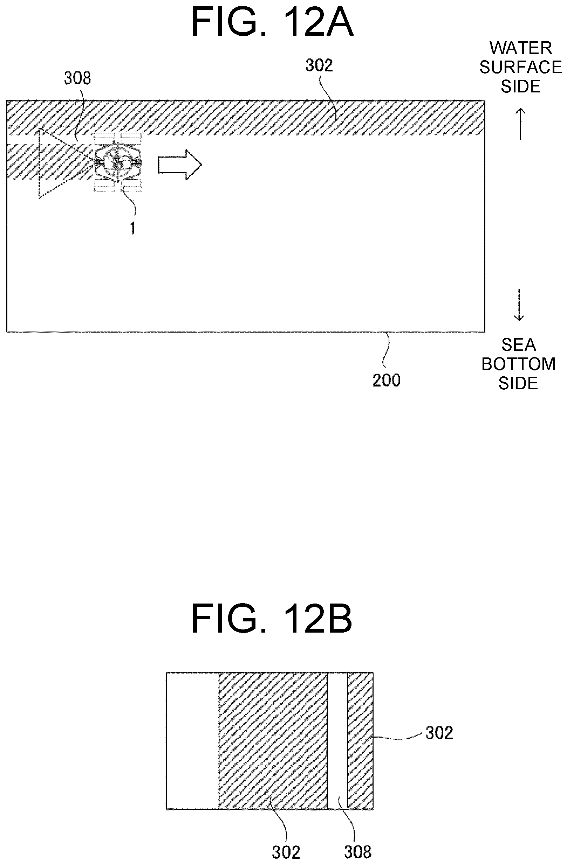

FIG. 12A is a diagram illustrating an image of detection of an uncleaned region 308. In the example shown in FIG. 12A, the uncleaned region detection unit 25 detects the uncleaned region 308 using the captured image captured by the camera 1b that captures an image in a direction opposite to the traveling direction (indicated by a void arrow in the drawing). This configuration allows the uncleaned region detection unit 25 to confirm whether or not the uncleaned region 308 is generated immediately after cleaning. However, the uncleaned region detection unit 25 may detect the uncleaned region 308 using the captured image captured by the camera 1b that captures an image in the traveling direction.

FIG. 12B is a schematic diagram illustrating an image of image-processed captured image captured by a camera 1b that captures an image in a direction opposite to a traveling direction. The uncleaned region detection unit 25 detects a region sandwiched between two cleaned traces 302 or surrounded by a plurality of cleaned traces 302 as the uncleaned region 308 using the image-processed image.

When the uncleaned region detection unit 25 detects the uncleaned region 308, it specifies the position thereof on the net for aquaculture 200. Then, the uncleaned region detection unit 25 stores the uncleaned region information including the position information in the storage 3. The position information of the uncleaned region 308 on the net for aquaculture 200 can be calculated using, for example, information obtained from the water depth sensor 1c and IMU 1d.

In the present embodiment, the uncleaned region detection unit 25 generates an image indicating the position of the detected uncleaned region 308 on the net for aquaculture 200 and causes the display 6 (see FIG. 1) to display the image. That is, the controller 2 generates an image indicating the position of the uncleaned region 308 in the target to be cleaned and causes the display 6 to display the image. Such a configuration allows the cleaning worker to easily recognize the position of the uncleaned region 308.

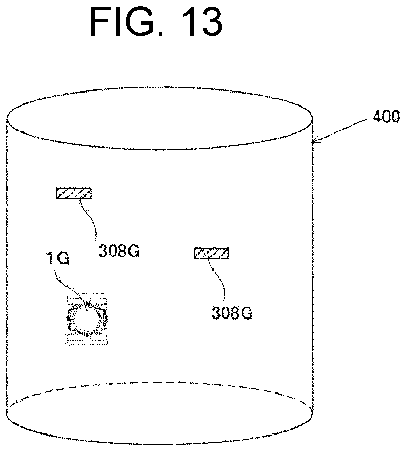

FIG. 13 is a schematic diagram illustrating an image displaying uncleaned regions 308. In the example shown in FIG. 13, uncleaned region images 308G indicating the position of the uncleaned region 308 are displayed on the map 400 which is displayed on the display 6 and indicates the current position of the autonomous-traveling cleaning machine 1. A reference symbol 1G in the map 400 is an icon indicating the position of the autonomous-traveling cleaning machine 1. The example shown in FIG. 13 allows the cleaning worker to easily grasp a positional relationship between the autonomous-traveling cleaning machine 1 and the uncleaned region 308. This makes it possible to efficiently perform a finish cleaning for cleaning the uncleaned region 308 by the manual operation. Note that the finish cleaning is not necessary to be the manual operation. Based on the position information stored in the storage 3, the autonomous-traveling cleaning machine 1 may autonomously move to the position of the uncleaned region 308 and autonomously perform the finish cleaning.

### 5. Flow of Cleaning by Autonomous traveling

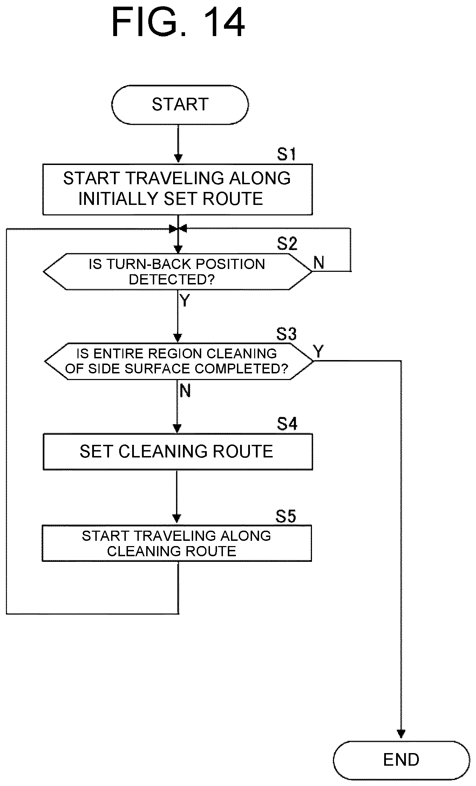

Next, a flow of cleaning by the autonomous traveling of the underwater cleaning apparatus 100 will be described. FIG. 14 is a flowchart illustrating the flow of cleaning by the autonomous traveling of the underwater cleaning apparatus 100. In the example shown in FIG. 14, it is assumed that the side surface of a cylindrical-shaped net for aquaculture is cleaned. The flowchart shown in FIG. 14 is started, for example, when the autonomous-traveling cleaning machine 1 is disposed at the end portion on the water surface side of the net for aquaculture.

**In** step S1, the autonomous-traveling cleaning machine 1 starts the autonomous traveling along an initially set route. The initially set route is a route circulating along the inner circumferential surface of the net for aquaculture while maintaining the target water depth. The autonomous traveling is performed under the control of the travel control unit 21. The trace of the net for aquaculture, on which the autonomous-traveling cleaning machine 1 travels by the autonomous traveling, is cleaned. When the autonomous traveling along the initially set route is started, the process proceeds to the next step S2.

In step S2, it is determined whether or not a turn-back position is detected by the turn-back position determination unit 24. The turn-back position is detected by using a captured image captured by the camera 1b. If the turn-back position is detected (Yes in step S2), the process proceeds to the next step S3. If the turn-back position is not detected (No in step S2), the process of step S2 is repeated.

In step S3, it is determined whether or not cleaning of the entire region of the side surface of the net for aquaculture is completed. Whether or not the cleaning of the entire region is completed may be determined by, for example, determining whether or not the water depth level of the autonomous-traveling cleaning machine 1 reaches the water depth level of the bottom surface of the net for aquaculture. In addition to the water depth, for example, the determination may be performed using a captured image captured by the camera 1b. If it is determined that the cleaning of the entire region of the side surface of the net for aquaculture is completed (Yes in step S3), the cleaning is finished by the autonomous traveling on the side surface of the net for aquaculture. If it is determined that the cleaning of the entire region of the side surface of the net for aquaculture is not completed (No in step S3), the process proceeds to the next step S4.

In step S4, the route generation unit 23 generates a next cleaning route. The cleaning route is generated based on the cleaned trace detected from the captured image. The cleaning route is generated such that the autonomous-traveling cleaning machine 1 travels along and adjacently to the cleaned trace. However, if the cleaned trace is not detected, the target water depth is set, and a route for maintaining the target water depth is set as the cleaning route. Upon the cleaning route is set, the process proceeds to a next step S5.

In step S5, the autonomous traveling along the generated cleaning route is started. At the start of new autonomous traveling along the generated cleaning route, the autonomous-traveling cleaning machine 1 reverses the traveling direction and changes the water depth. Furthermore, the cleaning route generated based on the cleaned trace is updated at any time by the captured images sequentially obtained after the start of the autonomous traveling. The autonomous-traveling cleaning machine 1 autonomously travels along the cleaning route updated at any time. Upon the autonomous traveling is started, the process is returned to step S2 described above, and the processes of step S2 and later are performed.

As described above, the cleaning of the net for aquaculture is performed while the cleaning route of the autonomous-traveling cleaning machine 1 is determined according to the cleaning state. This makes it possible to reduce the probability of the occurrence of an uncleaned region as compared to the case where the autonomous traveling is performed along the cleaning route determined from the shape of the aquaculture net regardless of the cleaning state. In a configuration in which cleaning is performed along the cleaning route determined from the shape of the net for aquaculture, since the shape of the net for aquaculture may change due to waves or tidal currents, or the accuracy of estimation of the amount of movement may decrease due to slipping of the wheels 112, it is likely to be difficult to clean an appropriate range. Traveling along and adjacently to the cleaned trace obtained from the captured image allows an appropriate range of the net for aquaculture to be cleaned while suppressing the influence of the shape change of the net for aquaculture and the slip of the wheels 112.

In the above, it is configured so that the side surface of the net for aquaculture is cleaned while repeating the circulation along the inner circumferential surface of the net for aquaculture and the change of the water depth after the circulation. However, this is for illustrative purpose only. Depending on the shape of the mesh of the net for aquaculture, cleaning efficiency may be more improved by cleaning the net for aquaculture with a cleaning pattern different from the above-described cleaning pattern.

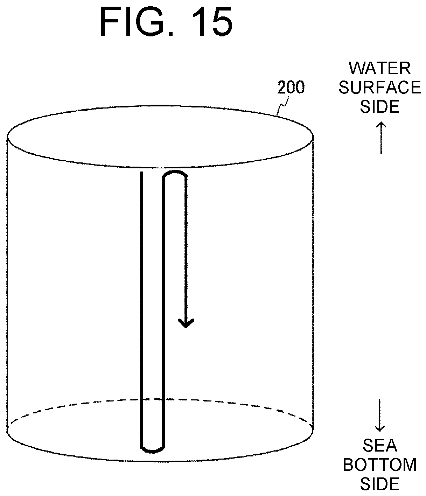

FIG. 15 is a schematic diagram showing another example of the cleaning pattern of the net for aquaculture 200. In the example shown in FIG. 15, the autonomous-traveling cleaning machine 1 cleans the entire side surface of the net for aquaculture 200 while repeating the movement in the water depth direction (vertical direction) and the change of the azimuth angle. In the movement in the vertical direction, movement from the water surface side to the bottom surface side and movement from the bottom surface side to the water surface side are performed in turn. Even when the cleaning is performed in such a cleaning pattern, using a method of traveling along and adjacently to the cleaned trace allows the probability of occurrence of the uncleaned region to be reduced and allows the autonomous-traveling cleaning machine 1 to perform the cleaning by the autonomous traveling.

### 6. Alternative Embodiment

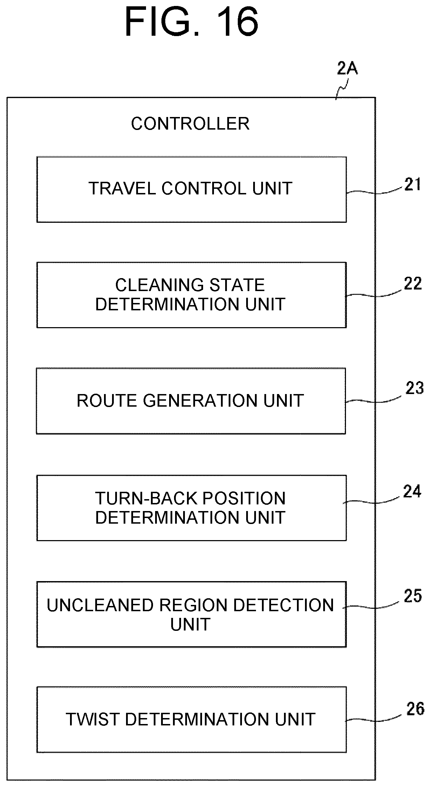

FIG. 16 is a block diagram illustrating a function of a controller 2A according to an alternative embodiment, which is provided at the underwater cleaning apparatus 100. The controller 2A according to the alternative embodiment is different from the controller 2 according to the above-described embodiment in that a twist determination unit 26 is provided. The different point will be mainly described below.

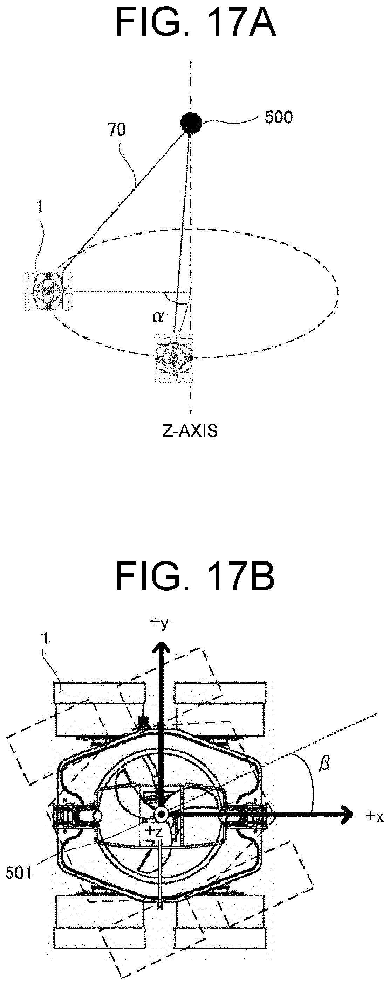

As described above, the underwater cleaning apparatus 100 includes the electric wire bundle 7 and the hose 8. These components are roughly collected together and connected to the autonomous-traveling cleaning machine 1. That is, the underwater cleaning apparatus 100 includes a connector 70 (see FIG. 17A referred later) extending from the autonomous-traveling cleaning machine 1. The connector 70 is, for example, an elongated connector extending from land or shipboard to the autonomous-traveling cleaning machine 1.

The connector 70 may be possibly twisted due to the traveling of the autonomous-traveling cleaning machine 1 under water. During the autonomous traveling of the autonomous-traveling cleaning machine 1, as described above, the traveling direction is reversed at the turn-back position so that the connector 70 is not twisted. However, for example, when the autonomous-traveling cleaning machine 1 is manually operated, the autonomous-traveling cleaning machine 1 may be possibly twisted. The twist determination unit 26 determines the twist of the connector 70.

The twist determination unit 26 determines the twist of the connector 70 that occurs when the autonomous-traveling cleaning machine 1 travels on the net for aquaculture. Specifically, the twist determination unit 26 (controller 2A) determines the twist of the connector 70 by obtaining the rotation angle of the autonomous-traveling cleaning machine 1. By providing such a twist determination unit 26, for example, determination whether or not the connector 70 is twisted during the manual operation of the autonomous-traveling cleaning machine 1 can be performed.

When the autonomous-traveling cleaning machine 1 travels along a side surface of the net for aquaculture, for example, two kinds of twists are generated in the connector 70. These two kinds of twists will be described with reference to FIGS. 17A and 17B. FIG. 17A is a diagram for explaining the first twist generated in the connector 70. FIG. 17B is a diagram for explaining the second twist generated in the connector 70.

As shown in FIG. 17A, the first twist is generated by the rotation of the autonomous-traveling cleaning machine 1 around the Z-axis set in the vertical direction of a global coordinate system in which a fulcrum 500 of the connector 70 is defined as the origin. As shown in FIG. 17B, the second twist is generated by the rotation of the autonomous-traveling cleaning machine 1 around the z-axis set in the vertical direction of a local coordinate system in which a center position 501 of the autonomous-traveling cleaning machine 1 is defined as the origin.

From this point of view, the rotation angle obtained by the twist determination unit 26 (controller 2A) includes the first rotation angle α indicating the rotation of the autonomous-traveling cleaning machine 1 around the first coordinate axis set in the vertical direction of the global coordinate system in which the fulcrum 500 of the connector 70 is defined as the origin. Furthermore, the rotation angle obtained by the twist determination unit 26 (controller 2A) includes the second rotation angle β indicating the rotation of the autonomous-traveling cleaning machine 1 around the second coordinate axis set in the vertical direction of the local coordinate system in which the center position 501 of the autonomous-traveling cleaning machine 1 is defined as the origin. In this way, obtaining the rotation angle separated into the first rotation angle α and the second rotation angle β allows the twist of the connector 70 to be determined appropriately.

The first rotation angle α and the second rotation angle β can be obtained by using at least one of the water depth sensor, the inclination sensor, the gyro sensor, the azimuth sensor, and the rotational speed sensor of the wheels 112. As described above, in the present example, the IMU 1d (see FIG. 1) is mounted on the autonomous-traveling cleaning machine 1. In the present example, the first rotation angle α and the second rotation angle β can be obtained using the information provided by IMU 1d.

The twist determination unit 26 (controller 2A) may cause a notificator to notify abnormality when the rotation angle is not less than a predetermined amount. The notificator may be the display 6, for example. That is, the underwater cleaning apparatus 100 according to the present example includes a notificator. In the notification using the display 6, the twist determination unit 26 may be configured to cause a display screen of the display 6 to display that the connector 70 has twist abnormalities. Furthermore, the twist determination unit 26 may cause the display screen to display an indication for prompting the user to operate the autonomous-traveling cleaning machine 1 such that the rotation angle of the autonomous-traveling cleaning machine 1 becomes less than a predetermined amount. In response to the notification, the cleaning worker may cause the autonomous-traveling cleaning machine 1 to travel by manual operation to eliminate the twist.

The notificator may be a device other than the display 6. For example, the notificator may be a sound output device, a light emitting device, or the like instead of or in addition to the display 6. That is, the occurrence of the twist abnormalities may be notified by sound or light.

Furthermore, in the present example, the rotation angle includes the first rotation angle α and the second rotation angle β. The twist determination unit 26 may be configured to detect the abnormalities (twist abnormalities) when at least one of the first rotation angle α and the second rotation angle β is not less than a predetermined amount. Note that the predetermined amount for determining whether or not the abnormalities occur may differ between the first rotation angle α and the second rotation angle β. If the first rotation angle α is not less than the first predetermined amount, the twist abnormalities may be detected. If the second rotation angle β is not less than the second predetermined amount, the twist abnormalities may be detected.

When the twist determination unit 26 detects the twist abnormalities, it may be configured to prohibit switching from the manual traveling in which the autonomous-traveling cleaning machine 1 is manually operated to the autonomous traveling. That is, the controller 2A may be configured to prohibit the transition to the autonomous traveling when the rotation angle is not less than the predetermined amount. Specifically, the controller 2A may prohibit the transition to the autonomous traveling when any one of cases where the first rotation angle α is not less than the first predetermined amount and where the second rotation angle β is not less than the second predetermined amount is established.

When the twist abnormalities in which the twist amount exceeds the predetermined amount occur, since a load due to the twist is applied, the accuracy of the autonomous traveling of the autonomous-traveling cleaning machine 1 or the speed thereof decreases. Therefore, as the present example, by prohibiting the transition to the autonomous traveling when the twist abnormalities occur, it is possible to suppress the accuracy of the autonomous traveling from decreasing or suppress the cleaning efficiency from decreasing. When the transition to the autonomous traveling is prohibited, the cleaning worker who is notified of the event may eliminate the twist by the manual operation.

Furthermore, when the twist determination unit 26 detects the twist abnormalities, it may be configured to cause the autonomous-traveling cleaning machine 1 to perform the operation of autonomously eliminating the twist before starting the autonomous traveling. That is, the controller 2A may be configured to cause the autonomous-traveling cleaning machine 1 to perform the operation of autonomously eliminating the twist before starting the autonomous traveling when the rotation angle is not less than the predetermined amount. The operation of autonomously eliminating the twist may be, for example, in-situ turn. The in-situ turn may be the ultra-pivotal turn or the pivotal turn. Such a configuration makes it possible to appropriately perform the autonomous traveling while suppressing the traveling accuracy and the traveling speed from being decreased due to the twist load.

Furthermore, the route generation unit 23 may generate the cleaning route according to the rotation angle obtained by the twist determination unit 26. That is, the controller 2A may generate the cleaning route according to the rotation angle when switching from the manual traveling to the autonomous traveling. According to such a configuration, the twist can be eliminated while autonomously traveling on the cleaning route, and thus the twist can be efficiently eliminated.

The cleaning route for eliminating the twist may be, for example, a route that makes a U-turn at the turn-back position as shown in FIG. 7B. Furthermore, the cleaning route for eliminating the twist may be a route with a point for making the "in-situ turn" which eliminates the twist. In addition, the cleaning route for eliminating the twist may be a route to set the initial traveling direction of the autonomous-traveling cleaning machine 1 as an appropriate direction.

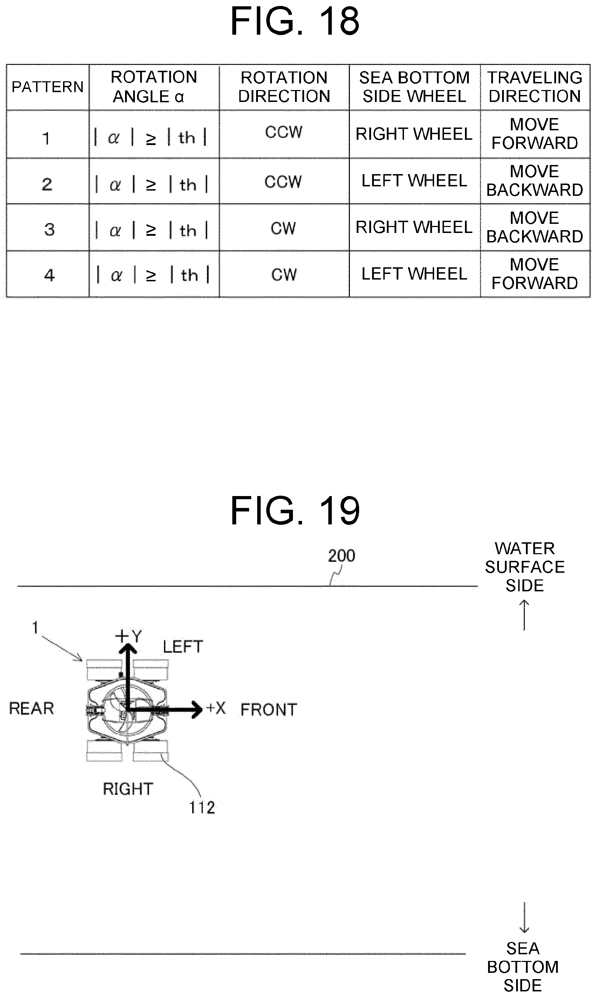

FIG. 18 is a diagram for explaining a route selection of the autonomous-traveling cleaning machine 1 when cleaning the side surface of the net for aquaculture 200. In FIG. 18, the rotation angle α is identical to the above-described the first rotation angle α. In addition, a rotation direction ccw means a counterclockwise rotation direction, and a rotation direction cw means a clockwise rotation direction. Furthermore, in the example shown in FIG. 18, it is assumed that the autonomous-traveling cleaning machine 1 performs cleaning while repeating the circulation of the inner circumferential surface of the net for aquaculture 200 and the change of the water depth.

The pattern 1 shown in FIG. 18 indicates that the autonomous-traveling cleaning machine 1 is rotated by a predetermined amount or more in the counterclockwise direction around the Z-axis (see FIG. 17A ). That is, the connector 70 is twisted in the counterclockwise direction, and the twist abnormalities occur. In the pattern 1, similarly to the state shown in FIG. 19, the autonomous-traveling cleaning machine 1, which is supposed to perform the autonomous traveling, takes such a posture that the right wheels 112 face the sea bottom side. FIG. 19 is an auxiliary diagram for facilitating the understanding of the details described in FIG. 18. In the case of a state shown as the pattern 1, a route along which the autonomous-traveling cleaning machine 1 moves forward is selected as the cleaning route. The forward movement of the autonomous-traveling cleaning machine 1 allows the autonomous-traveling cleaning machine 1 to be rotated in the clockwise direction, so that the twist of the connector 70 can be eliminated.

Furthermore, in the pattern 2 shown in FIG. 18, similarly to the pattern 1, the autonomous-traveling cleaning machine 1 is rotated by a predetermined amount or more in the counterclockwise direction around the Z-axis. That is, the connector 70 is twisted in the counterclockwise direction, and the twist abnormalities occur. In the pattern 2, unlike the pattern 1, the autonomous-traveling cleaning machine 1 takes such a posture that the left wheels 112 face the sea bottom side. In the case of a state shown as the pattern 2, a route along which the autonomous-traveling cleaning machine 1 moves backward is selected as the cleaning route. The backward movement of the autonomous-traveling cleaning machine 1 allows the autonomous-traveling cleaning machine 1 to be rotated in the clockwise direction, so that the twist of the connector 70 can be eliminated.

Furthermore, in the pattern 3 shown in FIG. 18, the autonomous-traveling cleaning machine 1 is rotated by a predetermined amount or more in the clockwise direction around the Z-axis. That is, the connector 70 is twisted in the clockwise direction, so that the twist abnormalities occur. In the pattern 3, like the pattern 1, the autonomous-traveling cleaning machine 1 takes such a posture that the right wheels 112 face the sea bottom side. In the case of a state shown as the pattern 3, a route along which the autonomous-traveling cleaning machine 1 moves backward is selected as the cleaning route. The backward movement of the autonomous-traveling cleaning machine 1 allows the autonomous-traveling cleaning machine 1 to be rotated in the counterclockwise direction, so that the twist of the connector 70 can be eliminated.

Furthermore, in the pattern 4 shown in FIG. 18, like the pattern 3, the autonomous-traveling cleaning machine 1 is rotated by a predetermined amount or more in the clockwise direction around the Z-axis. That is, the connector 70 is twisted in the clockwise direction, so that the twist abnormalities occur. In the pattern 4, like the pattern 2, the autonomous-traveling cleaning machine 1 takes such a posture that the left wheels 112 face the sea bottom side. In the case of a state shown as the pattern 4, a route along which the autonomous-traveling cleaning machine 1 moves forward is selected as the cleaning route. The forward movement of the autonomous-traveling cleaning machine 1 allows the autonomous-traveling cleaning machine 1 to be rotated in the counterclockwise direction, so that the twist of the connector 70 can be eliminated.

### 7. Notes, etc.

Invention is defined in claim 1, and various technical features disclosed in the present specification can be changed in various ways. In addition, the multiple embodiments and alternative examples shown in the present specification may be combined to the extent possible.

### 8. Appendices

A first example of underwater cleaning apparatus in the present specification may include a cleaning machine that cleans a target to be cleaned under water; and a controller that generates a cleaning route for cleaning the target to be cleaned, wherein the cleaning machine autonomously travels along the cleaning route. (first example).

The underwater cleaning apparatus of the first example may further include a camera mounted on the cleaning machine, wherein the controller determines the cleaning state of the target to be cleaned based on a captured image captured by the camera (second example).

In the underwater cleaning apparatus having the second example, the controller may generate the cleaning route based on a cleaned trace obtained by determination of the cleaning state (third example).

In the underwater cleaning apparatus having the third example, the controller may generate the cleaning route based on a water depth when the cleaning route cannot be generated based on the cleaned trace (fourth example).

The underwater cleaning apparatus of any one of the second to fourth examples may further include a storage, wherein the controller stores an uncleaned region detected by determination of the cleaning state in the storage (fifth example).

The underwater cleaning apparatus having the fifth example may further include a display, wherein the controller generates an image indicating a position of the uncleaned region in the target to be cleaned and causes the display to display the image (sixth example).

**In** the underwater cleaning apparatus having any one of the second to sixth examples, the controller may specify a turn-back position where a traveling direction of the cleaning machine is reversed based on a cleaned trace obtained by determination of the cleaning state(seventh example).

The underwater cleaning apparatus having any one of the first to seventh examples may further include a connector extending from the cleaning machine, wherein the controller determines a twist of the connector by obtaining a rotation angle of the cleaning machine (eighth example).

**In** the underwater cleaning apparatus of the eighth example, the rotation angle may include: a first rotation angle indicating rotation of the cleaning machine around a first coordinate axis set in a vertical direction of a global coordinate system in which a fulcrum of the connector is defined as an origin; and a second rotation angle indicating rotation of the cleaning machine around a second coordinate axis set in a vertical direction of a local coordinate system in which a center position of the cleaning machine is defined as an origin (ninth example).

The underwater cleaning apparatus of the eighth or ninth example may further include a notificator, wherein the controller causes the notificator to notify abnormality when the rotation angle is not less than a predetermined amount (tenth example).

**In** the underwater cleaning apparatus of any one of the eighth to tenth examples, the controller may prohibit transition to the autonomous traveling when the rotation angle is not less than a predetermined amount (eleventh example).

In the underwater cleaning apparatus having any one of the eighth to eleventh examples, the controller may cause the cleaning machine to perform an operation of autonomously eliminating the twist before starting the autonomous traveling when the rotation angle is not less than a predetermined amount (twelfth example).

In the underwater cleaning apparatus having any one of the eighth to twelfth examples, the controller may generate the cleaning route according to the rotation angle when switching from a manual traveling in which the cleaning machine is manually operated to the autonomous traveling (thirteenth example).

### REFERENCE SIGNS LIST

1 Autonomous-traveling cleaning machine (cleaning machine)
1b Camera
2, 2A Controller
3 Storage
6 Display (notificator)
70 Connector
100 Underwater cleaning apparatus
200 Net for aquaculture (target to be cleaned)
302 Cleaned trace
305 Cleaning route
308 Uncleaned region
500 Fulcrum of connector
501 Center of autonomous-traveling cleaning machine (center of cleaning machine)
α First rotation angle
β Second rotation angle

## Claims

1. An underwater cleaning apparatus (100) comprising:
a cleaning machine (1) configured to clean a target to be cleaned under water; and
a controller (2) configured to generate a cleaning route (305) for cleaning the target to be cleaned,
wherein the cleaning machine (1) is configured to automously travel along the cleaning route (305), further comprising a camera (1b) mounted on the cleaning machine (1),
wherein the controller (2) is configured to determine a cleaning state of the target to be cleaned based on a captured image captured by the camera (1b), wherein the controller (2) is configured to generate the cleaning route (305) based on a cleaned trace obtained by determination of the cleaning state, **characterized in that** the controller (2) is configured to generate the cleaning route (305) based on a water depth when the cleaning route (305) cannot be generated based on the cleaned trace.

2. The underwater cleaning apparatus (100) according to claim 1 further comprising a storage (3),
wherein the controller (2) is configured to store an uncleaned region detected by determination of the cleaning state in the storage (3).

3. The underwater cleaning apparatus (100) according to claim 2 further comprising a display (6),
wherein the controller (2) is configured to generate an image indicating a position of the uncleaned region in the target to be cleaned and is configured to cause the display (6) to display the indicating image.

4. The underwater cleaning apparatus (100) according to claim 1, wherein the controller (2) is configured to specify
a turn-back position where a traveling direction of the cleaning machine (1) is reversed based on a cleaned trace obtained by determination of the cleaning state.

## Patentansprüche

1. Unterwasserreinigungsgerät (100), umfassend:
eine Reinigungsmaschine (1), die dazu konfiguriert ist, ein zu reinigendes Ziel unter Wasser zu reinigen; und
eine Steuereinheit (2), die dazu konfiguriert ist, eine Reinigungsroute (305) zum Reinigen des zu reinigenden Ziels zu erzeugen,
wobei die Reinigungsmaschine (1) dazu konfiguriert ist, sich autonom entlang der Reinigungsroute (305) zu bewegen,
ferner umfassend eine Kamera (1b), die auf der Reinigungsmaschine (1) montiert ist,
wobei die Steuereinheit (2) dazu konfiguriert ist, einen Reinigungszustand des zu reinigenden Ziels auf der Basis eines aufgenommenen Bilds, das von der Kamera (1b) aufgenommen wurde, zu bestimmen,
wobei die Steuereinheit (2) dazu konfiguriert ist, die Reinigungsroute (305) auf der Basis einer gereinigten Spur, die durch eine Bestimmung des Reinigungszustands erhalten wird, zu erzeugen,
**dadurch gekennzeichnet, dass** die Steuereinheit (2) dazu konfiguriert ist, die Reinigungsroute (305) auf der Basis einer Wassertiefe zu erzeugen, wenn die Reinigungsroute (305) nicht auf der Basis der gereinigten Spur erzeugt werden kann.

2. Unterwasserreinigungsgerät (100) nach Anspruch 1, ferner umfassend einen Speicher (3),
wobei die Steuereinheit (2) dazu konfiguriert ist, eine ungereinigte Region, die durch eine Bestimmung des Reinigungszustands erkannt wird, in dem Speicher (3) zu speichern.

3. Unterwasserreinigungsgerät (100) nach Anspruch 2, ferner umfassend eine Anzeige (6),
wobei die Steuereinheit (2) dazu konfiguriert ist, ein Bild zu erzeugen, das eine Position der ungereinigten Region in dem zu reinigenden Ziel angibt, und dazu konfiguriert ist, zu bewirken, dass die Anzeige (6) das angebende Bild anzeigt.

4. Unterwasserreinigungsgerät (100) nach Anspruch 1, wobei die Steuereinheit (2) dazu konfiguriert ist, eine Umkehrposition, an der eine Bewegungsrichtung der Reinigungsmaschine (1) umgekehrt wird, auf der Basis einer gereinigten Spur, die durch eine Bestimmung des Reinigungszustands erhalten wird, zu spezifizieren.

## Revendications

1. Appareil de nettoyage sous l'eau (100) comprenant :
une machine de nettoyage (1) configurée pour nettoyer une cible à nettoyer sous l'eau ; et
un dispositif de commande (2) configuré pour générer un itinéraire de nettoyage (305) pour nettoyer la cible à nettoyer,
dans lequel la machine de nettoyage (1) est configurée pour se déplacer de façon autonome le long de l'itinéraire de nettoyage (305), comprenant en outre une caméra (1b) montée sur la machine de nettoyage (1),
dans lequel le dispositif de commande (2) est configuré pour déterminer un état de nettoyage de la cible à nettoyer sur la base d'une image capturée par la caméra (1b),
dans lequel le dispositif de commande (2) est configuré pour générer l'itinéraire de nettoyage (305) sur la base d'une trace nettoyée obtenue par la détermination de l'état de nettoyage,
**caractérisé en ce que** le dispositif de commande (2) est configuré pour générer l'itinéraire de nettoyage (305) sur la base d'une profondeur d'eau lorsque l'itinéraire de nettoyage (305) ne peut pas être généré sur la base de la trace nettoyée.

2. Appareil de nettoyage sous l'eau (100) selon la revendication 1, comprenant en outre un stockage (3),
dans lequel le dispositif de commande (2) est configuré pour stocker dans le stockage (3) une région non nettoyée détectée par la détermination de l'état de nettoyage.

3. Appareil de nettoyage sous l'eau (100) selon la revendication 2, comprenant en outre un affichage (6),
dans lequel le dispositif de commande (2) est configuré pour générer une image indiquant une position de la région non nettoyée dans la cible à nettoyer et est configuré pour amener l'affichage (6) à afficher l'image d'indication.

4. Appareil de nettoyage sous l'eau (100) selon la revendication 1, dans lequel le dispositif de commande (2) est configuré pour spécifier une position de retour où une direction de déplacement de la machine de nettoyage (1) est inversée sur la base d'une trace nettoyée obtenue par la détermination de l'état de nettoyage.
